# EUROPEAN PATENT APPLICATION

(11) **EP 1 718 082 A1**
(43) Date of publication of application: **02.11.2006**
(21) Application number: 05300329.9
(22) Date of filing: 27.04.2005
(51) Int. Cl.: H04N 9/09

(54) **A 4k x 2k video camera**

(71) Applicant: Thomson Licensing, 92100 Boulogne-Billancourt (FR)
(72) Inventor: Centen, Petrus Gijsbertus Maria, 5051 BW, Goirle (NL); Bancroft, David J., RG4 7TH, Reading (GB)
(74) Representative: Rossmanith, Manfred

(57) **Abstract**

Electronic camera comprising an objective capturing light and directing it to an optical beam splitter dividing the incoming light into three colour components red, green and blue. The camera comprises one imager for each colour component. The imagers have a horizontal resolution being larger than the vertical resolution. The horizontal to vertical aspect ratio of the imagers is smaller than one. The camera is provided with an anamorphic lens expanding the captured image in the vertical direction.

## Description

### Field of the invention

The present invention is related to an electronic camera having improved spatial resolution. The invention is also related to a projector adapted to the camera, and to a system comprising both camera and projector.

### Background

The growing interest in High Definition Television (HDTV) systems entails the need for high resolution electronic cameras. Since the aspect ratio for HDTV is 16:9 it is evident that more pixels are needed in the horizontal direction than in the vertical direction. In particular, several attempts have been made to develop a camera having 4k pixels in the horizontal and 2k pixels in the vertical direction. Such a camera is also briefly called a 4k x 2k camera.

Previous approaches to make a 4k x 2k Camera have been based on sensors that are larger than the normal mainstream sensors conventionally used for broadcast cameras. Obviously, these non-standard sensors are more expensive than conventional sensors.

Mitani et al. describe in their article "A 4k x 2k-Pixel Color Image Pickup System" in IEICE Trans. Inf. & Syst., Vol. E82-D, No. 8, p. 1219ff (1999) an experimental 4k x 2k pixel progressive scan colour camera system. The camera is equipped with four 2 million pixel CMD (Charge Modulation Device) imagers. One imager is used for each of the colours red and blue, whereas the remaining two sensors are used for the colour green. A spatial offset between the two green imagers is applied to effectively improve both horizontal and vertical resolution. Although the resolution for the red and blue signals remains unchanged, the resolution of the camera system overall is significantly improved because the luminance signal is mainly composed of green information. The proposed camera system requires a non-standard beam splitter for the camera head. This is usually an expensive component.

### Summary of the invention

Taking this as a starting point an alternative camera providing 4k pixel horizontal and 2k pixel vertical resolution would be desirable.

The invention proposes an electronic camera comprising an object lens capturing light and directing it to an optical beam splitter. The beam splitter divides the incoming light into three colour components red, green and blue. The camera further comprises one imager for each colour component. The imagers have a greater number of pixels in the horizontal direction than in the vertical direction. Each pixel has a horizontal to vertical aspect ratio that is less than unity. The camera is provided with an anamorphic lens that expands the captured image in the vertical direction. This allows efficient utilization of a large part of the light sensitive area of the imagers. It is also possible that the anamorphic lens may compress the captured image in the horizontal direction to enhance the advantage mentioned above.

In a specific embodiment of the present invention the resulting horizontal resolution of the imagers is 4k pixel in horizontal and 2k pixel in vertical direction.

It is advantageous to provide the camera with a digital image data processing unit for compensating the distortion of the image that is caused by the anamorphic lens of the camera.

Alternatively, the invention proposes an electronic camera comprising an object lens capturing light from a scene and directing it to an optical beam splitter dividing the incoming light into three colour components red, green and blue, wherein the camera further comprises one imager for each colour component, wherein the imagers have a vertical resolution and a horizontal resolution, characterized in that the combined horizontal resolution (1k) of four frames (4k) is greater than the vertical resolution (2k), in that the horizontal to vertical aspect ratio of each pixel in the imagers is less than unity, and that the camera is provided with an interpolator to produce an image of 4kx2k to be and/or printed to film and/or projected though an anamorphic lens expanding the captured image in the horizontal direction, thereby changing the 9:16 aspect ratio back to the original 16:9, of course, it would also be desirable to provide a projector cooperating with the camera according to the invention.

The invention also proposes a projector for projecting the image data onto a screen. The projector is provided with an anamorphic lens for compensating the distortion of the image that is caused by the anamorphic lens of the camera according to the invention.

Finally, the invention suggests an image capturing and reproduction system comprising an electronic camera and a projector according to the invention.

### Brief description of the drawings

The invention, its features, and advantages will be better understood by reading the following detailed description of a preferred embodiment. The description is appended by an illustrative drawing.

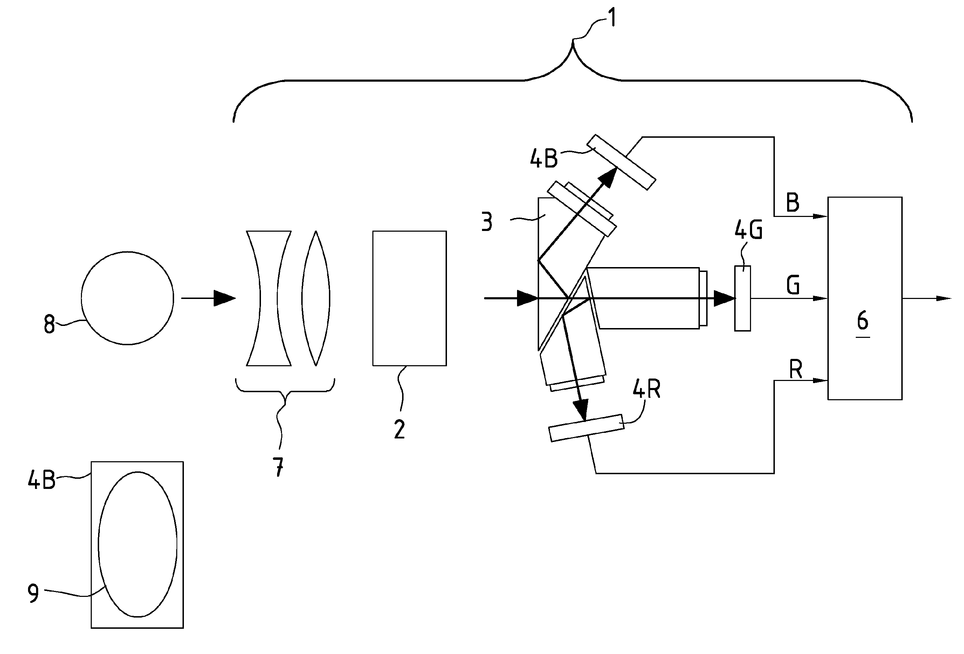

The only Figure of the drawing shows a schematic illustration of an embodiment of the electronic camera according to the invention.

### Detailed description of a preferred embodiment of the invention

In the Figure a schematic illustration of an electronic camera according to the invention is shown. The camera as a whole is designated with the reference number 1. It comprises an object lens 2 for capturing the light of an image. The object lens directs the light to a beam splitter 3. The beam splitter 3 divides the incoming light from the object lens 2 into the three primary colours red (R), green (G) and blue (B). Thus, the beam splitter 3 outputs the three colour components of the captured image separately. Each colour component R, G, B is captured by a separate imager 4R, 4G, 4B optically coupled to the respective colour component output of the beam splitter 3. The beam splitter 3 and imagers 4R, 4G, 4B are mounted in assembly forming a mechanical unit. This mechanical unit is also called "camera head". The imagers 4R, 4G, 4B convert the optical components into electrical signals. The electrical output signals of the imagers 4R, 4G, 4B are connected to a signal processing unit 5. Appropriate signal processing units 5 are known in the art. The signal processing unit 5 processes the image signals in a conventional way according to a preselected standard, for example ITU-R Recommendation BT.709. For the imagers 4R, 4G, 4B, commercially available devices are used having 4k pixels in the horizontal direction and 2k pixels in the vertical direction. The geometric aspect ratio of these imagers is normally 16:9.

Contrary to practice in conventional cameras, the assembly comprising the imagers is mounted in a configuration rotated by 90°, i.e. the normally horizontally-oriented sides of the imagers are vertically oriented and vice versa. Therefore the imagers 4R, 4G, 4B in the camera shown in the Figure have a photo-sensitive area which is shorter in the horizontal direction than in the vertical direction. The aspect ratio of the resulting image is consequently 9:16. This image is then composed of 2k pixels in its vertical axis but has 4k pixels in its horizontal axis.

If one compares these characteristics with an electronic camera made by Thomson and commercialised under the trademark "VIPER" one could describe the present electronic camera as a VIPER camera with a camera head that has been rotated by 90° with respect to the scene that it is capturing. To compensate for this rotation it is then also necessary to rearrange the electrical connections between the imagers 4R, 4G, 4B in order to read out the proper imager lines for the horizontal and vertical directions, respectively.

In an alternative embodiment the re-adjustment of the image directions is made by an appropriate adjustment of the read-out sequence of a frame memory contained in the signal processing unit 5 (not shown in the Figure).

Although the resolution with 4k x 2k (H x V) corresponds to what is desired, the aspect ratio of 9:16 is unfavourable for the desired widescreen aspect ratio during reproduction, such as a TV screen having a 16:9 aspect ratio.

The imager 4B is shown in the lower part of the Figure on an enlarged scale as a representative of all imagers. In the vertical direction its length is 16 in arbitrary units while in the horizontal direction its length is only 9 in arbitrary units.

In order to use as much as possible of the light-sensitive area of the imagers, the electronic camera 1 according to the invention is provided with an anamorphic lens 7 which effects an optical compression of the captured image in the horizontal direction while at the same time the image is expanded in the vertical direction. The effect of the anamorphic lens 7 on the original image, symbolized as a circle 8, is illustrated in the Figure. The circle 8 is imaged on the imagers as an ellipse 9 filling the major part of the light-sensitive are of the imagers 4R, 4G, 4B, as it is exemplarily shown on the enlarged imager 4B. It is also possible to have a anamorphic lens that effects only one of the axis.

Before the video data representing the distorted image can be reproduced it is necessary to remove the distortion caused by the anamorphic lens 7. There are several possibilities for doing this.

In a first alternative the video data are electronically corrected by the signal processing unit 6.

In a second alternative the video data remain uncorrected but a projector used for display is provided with an anamorphic lens having an optical distortion characteristic that is opposite to that of the anamorphic lens 7 of the camera. This result in the original circle 8 being displayed correctly once again as a circle.

## Claims

1. An electronic camera comprising an object lens capturing light from a scene and directing it to an optical beam splitter (3) dividing the incoming light into three colour components red, green and blue, wherein the camera further comprises one imager (4R, 4G, 4B) for each colour component, wherein the imagers have a vertical resolution and a horizontal resolution, **characterized in that** the horizontal resolution is greater than the vertical resolution, that the horizontal to vertical aspect ratio of the imagers is less than unity, and that the camera is provided with an anamorphic lens (7) expanding the captured image in the vertical direction.

2. The camera according to claim 1, **characterized in that** the horizontal to vertical aspect ratio of each pixel in the imagers is less than unity.

3. The camera according to one or several of the preceding claims, **characterized in that** the anamorphic lens (7) compresses the captured image in the horizontal direction.

4. The camera according to one or several of the preceding claims, **characterized in that** the horizontal resolution of the imagers (4R, 4G, 4B) is 4k pixels in the horizontal and 2k pixels in the vertical direction.

5. The camera according to one or several of the preceding claims, **characterized in that** the camera is provided with a digital image data processing unit (5) for compensating the distortion of the image that is caused by the anamorphic lens (7) of the camera.

6. An electronic camera comprising an object lens capturing light from a scene and directing it to an optical beam splitter (3) dividing the incoming light into three colour components red, green and blue, wherein the camera further comprises one imager (4R, 4G, 4B) for each colour component, wherein the imagers have a vertical resolution and a horizontal resolution, **characterized in that** the combined horizontal resolution (1k) of four frames (4k) is greater than the vertical resolution (2k), **in that** the horizontal to vertical aspect ratio of each pixel in the imagers is less than unity, and that the camera is provided with an interpolator to produce an image of 4kx2k to be and/or printed to film and/or projected though an anamorphic lens expanding the captured image in the horizontal direction, thereby changing the 9:16 aspect ratio back to the original 16:9

7. A projector for projecting image data onto a screen, **characterized in that** the projector is provided with an anamorphic lens for compensating the distortion of the image that is caused by the anamorphic lens (7) of the camera according to one or several of the preceding claims.

8. An image capturing and reproduction system comprising an electronic camera according to claim 1 and a projector according to claim 7.
